# EUROPEAN PATENT SPECIFICATION

(11) **EP 2 819 401 B1**
(45) Date of publication and mention of the grant of the patent: **25.09.2019**
(21) Application number: 13751475.8
(22) Date of filing: 12.02.2013
(51) Int. Cl.: G02B 27/01, G02C 9/04, G02C 1/00

(54) **DISPLAY DEVICE**
ANZEIGEVORRICHTUNG
DISPOSITIF D'AFFICHAGE

(30) Priority: 22.02.2012 JP 2012035993
(43) Date of publication of application: 31.12.2014
(73) Proprietor: Sony Corporation, Tokyo 108-0075 (JP)
(72) Inventor: MIYAGAWA Makoto, Tokyo 108-0075 (JP)
(74) Representative: D Young & Co LLP
(86) International application number: PCT/JP2013/053296
(87) International publication number: WO 2013/125396

(56) References cited:
- WO-A1-2007/037089
- WO-A1-2011/062591
- JP-A- 2004 282 768
- JP-A- 2010 145 859
- US-A- 5 587 747
- US-A1- 2004 240 072
- US-A1- 2010 073 627
- US-B1- 8 029 132
- US-B2- 7 553 014

## Description

### Technical Field

The present disclosure relates to a display device, particularly to a display device that is, for example, mounted for use on the face (head) of a user and has improved usability.

### Background Art

There is available a glasses-type HMD (Head Mounted Display) that is, for example, mounted on the face (head) of a user.

In order to achieve improved design quality and reduced size, the glasses-type HMD is designed to have almost no space between the face of a user and the glasses-type HMD when worn by the user (see, for example, Patent Literature 1).

US 2004/0240072 discloses an HMD device, comprising a frame, which is mountable on the head of a user, an image-generating device mounted on said frame and comprising projection optics, a connecting device and glasses for correcting an eye deficiency of the user, said glasses not having sides and said glasses being releasably connectable with said frame by said connecting device, said glasses being arranged following said projection optics when the glasses are connected with the frame.

WO 2011/062591 discloses a primarily reflective-based head mounted display device, for displaying and viewing visual content from a visual display source, including a frame, at least one optics housing connected to said frame, wherein the optics housing and frame are configured such that the optics housing may be positioned at least partially in front of an eye of a user, and wherein the optics housing includes a light-emitting visual source disposed within the optics housing for projecting visual content, and a plurality of reflective optical surfaces in optical communication with the light-emitting visual source that are configured to reflect a projection of the visual content into the eye of the user.

US 5587747 discloses an interchangeable eyeglass lens system for sunglasses and other eyewear so that more than one pair of lenses can be used with a particular frame. Lenses particularly adapted for interchangeability and having concavities on the lens periphery for engaging fastener devices, such as studs, resilient tangs, and spring loaded detents on the frame, are included in the system, which allows for the use of a relatively expensive or rigid frame without compromising the structural integrity of the overall eyeglass set. A complete system would have a pair of removable lenses, a frame having a nosebridge which can be removable also, and fasteners mounted on or within the frame or nosebridge for releasably holding the lenses in place on the frame by interengaging the concavities on the lenses. A removable nosebridge with antirotational device, and a spring loaded detent system adapted for use in the system are disclosed, as is a method of removably attaching a lens to the frame of the invention.

US 7553014 B2 discloses a spectacle frame comprising a spectacle frame front, the spectacle frame front comprising a pair of spaced apart and opposed arms, each of the pair at least one of the arms having an outer end thereof remote from an upper portion of the spectacle frame front, the outer end of at least one arm of the pair of arms comprising a lens retainer integral therewith for gripping and retaining a lens between the pair of spaced apart and opposed arms.

Documents US 2010/073627 and US 8 029 132 disclose other spectacles with relevant connecting elements.

### Citation List

### Patent Literature

Patent Literature 1: JP 2010-145859A

### Summary of Invention

### Technical Problem

Meanwhile, for example, a user may wear a glasses-type HMD for use with the user's glasses for vision correction on.

However, in this situation, there is almost no space between the face of the user and the glasses-type HMD as described above, and thus when the user wears the glasses-type HMD with the user's glasses on, the usability of the HMD is reduced.

The present disclosure has been made in view of such a situation to improve the usability of a display device that is mounted for use on the face of a user.

According to an aspect of the present invention, there is provided a display device according to independent claim 1.

A projection unit configured to project the image on the display panel may be further included. The projection unit may be provided with the connecting portion.

The display panel may allow incident light from an outside to pass through irrespective of whether or not the image is projected.

The slide portion may fix the plate-like member by being disposed in the initial position, the plate-like member being connected to the connecting portion and disposed in an oblique direction from an outer corner to an inner corner of the eyes of the user.

### Solution to Problem

According to an aspect of the present disclosure, a plate-like member disposed between the eyes of the user and the display panel is connected to the connecting portion, and the slide portion fixes the plate-like member between the eyes of the user and the display panel by being disposed in a predetermined initial position and is slidable in a predetermined direction from the initial position, the plate-like member being connected to the connecting portion.

### Advantageous Effects of Invention

According to the present disclosure, it is possible to improve the usability of a display device that is mounted for use on the face of a user.

### Brief Description of Drawings

FIG. 1 is a perspective view of a head mounted display to which the present technology is applied.
FIG. 2 is a bottom view of the head mounted display of FIG. 1.
FIG. 3 is an illustration depicting an example in which a correcting lens is fixed by a slide portion.
FIG. 4 is a first illustration for explaining an example fixing method for fixing a correcting lens.
FIG. 5 is a second illustration for explaining an example fixing method for fixing a correcting lens.
FIG. 6 is a third illustration for explaining an example fixing method for fixing a correcting lens.

### Description of Embodiments

In the following, an embodiment in the present disclosure (hereinafter referred to as the present embodiment) will be described. The description is given in the following order:
1. Present Embodiment (an example in which a correcting lens is fixed by a slide portion)
2. Modification

### <1. Present Embodiment>

### [Perspective View of Head Mounted Display 1]

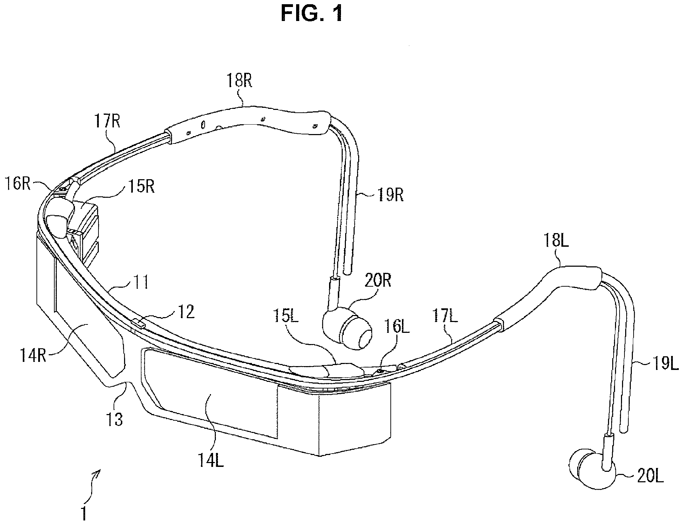

FIG. 1 illustrates an example view as seen in an oblique direction of a glasses-type head mounted display 1 which is the present embodiment.

The head mounted display 1 (hereinafter simply referred to as HMD 1) mainly includes a bent part 11, an image capturing unit 12, a front portion 13, display panels 14R and 14L, projection units 15R and 15L, hinges 16R and 16L, temples 17R and 17L, tips 18R and 18L, signal lines 19R and 19L, and earphones 20R and 20L.

The HMD 1 has the same shape as glasses and is mounted for use on the face (head) of a user like glasses. That is, the HMD1 is mounted on the face of a user with a tip 18R hanging over the right ear of the user and a tip 18L hanging over the left ear of the user. Thus, the display panel 14R is disposed in front of the right eye of the user and the display panel 14L is disposed in front of the left eye of the user.

The bend part 11 has a bow-like curved shape according to the shape of the user's face on which the HMD 1 is mounted. As illustrated in FIG. 1, the upper portion (the upper side in FIG. 1) of the bent part 11 is provided with the image capturing unit 12, and the lower portion (the lower side in FIG. 1) of the bent part 11 is provided with the front portion 13.

The image capturing unit 12 is a small-sized CCD (Charge Coupled Device) camera or the like which is provided in the upper middle of the bent part 11 to capture an image in front of a user equipped with the HMD 1 and to supply the image obtained by the capturing to the projection units 15R and 15L.

The front portion 13 is bonded to the bottom of the bend part 11 and surrounds and supports the display panels 14R and 14L. In addition to the projection units 15R and 15L, slide portions 32R and 32L for fixing correcting lenses 31R and 31L are provided on the back surface of the front portion 13.

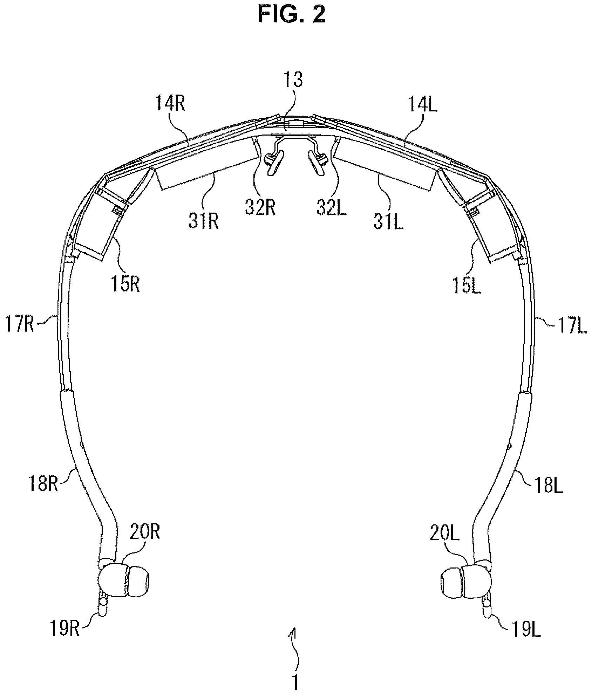

Here, the correcting lens 31R represents a lens for correcting (compensating) the vision of the right eye of a user, and the correcting lens 31L represents a lens for correcting the vision of the left eye of the user. The correcting lenses 31R and 31L and the slide portions 32R and 32L will be described in detail with reference to FIG. 2.

The display panel 14R is used as a screen on which an image of light is projected (displayed), the light being emitted from the projection unit 15R.

The display panel 14R is formed of a member (for example, a colorless, transparent member) which allows incident light from the outside to pass through irrespective of whether or not an image is projected.

Therefore, a user can visually recognize the surroundings of the user through the display panel 14R while visually recognizing an image projected on the display panel 14R with the right eye of the user. This is also the case with the display panel 14L.

The display panel 14L is configured similarly to the display panel 14R and used as a screen on which an image of light is projected (displayed), the light being emitted from the projection unit 15L.

The projection unit 15R is what is called a pico projector and projects (emits) an image as light on the display panel 14R, the image corresponding to an image signal supplied from a reproduction device (not illustrated) or the like via the signal line 19R. The projection unit 15R also supplies an audio signal to the earphone 20R via a signal line for audio signals, the audio signal being supplied from a reproduction device (not illustrated) or the like via the signal line 19R.

In addition, for example, the projection unit 15R determines an image to be displayed on the display panel 14R based on a captured image from the image capturing unit 12, and projects the determined image as light on the display panel 14R. In this manner, the projection unit 15R can achieve AR (Augmented Reality) in which additional information is superimposed and displayed according to the captured image from the image capturing unit 12. This is also the case with the projection unit 15L.

The projection unit 15L is configured similarly to the projection unit 15R, and projects an image as light on the display panel 14L, the image corresponding to an image signal supplied from a reproduction device (not illustrated) or the like via the signal line 19L. The projection unit 15L also supplies an audio signal to the earphone 20L via a signal line for audio signals, the audio signal being supplied from a reproduction device (not illustrated) or the like via the signal line 19L.

In addition, the projection unit 15L determines an image to be displayed on the display panel 14L based on a captured image from the image capturing unit 12, and emits the determined image as light to be projected on the display panel 14L.

The projection methods by which the projection unit 15R projects an image on the display panel 14R include a first projection method and a second projection method, the first projection method by which light as an image is projected in a direction normal to the surface of the display panel 14R, the second projection method by which light as an image is projected in a direction oblique to the surface of the display panel 14R. This is also the case with the projection unit 15L.

The details of the first projection method are described in JP 2010-145859A, and the details of the second projection method are described in JP 2009-133999A.

The hinge 16R connects the right end portion (near where the projection unit 15R is provided) of the bend part 11 and one end of the temple 17R. The hinge 16L connects the left end part (near where the projection unit 15L is provided) of the bent part 11 and one end of the temple 17L.

The temple 17R is connected to the bend part 11 via the hinge 16R and is freely rotatable with respect to the state illustrated in FIG. 1 around the hinge 16R as a rotational axis in a direction in which the bend part 11 exists. The temple 17L is connected to the bend part 11 via the hinge 16L and is freely rotatable with respect to the state illustrated in FIG. 1 around the hinge 16L as a rotational axis in a direction in which the bend part 11 exists.

The tip 18R is provided at the other end of the temple 17R and is disposed on the right ear of a user. The tip 18L is provided at the other end of the temple 17L and is disposed on the right ear of the user.

The signal line 19R is a signal line which is pulled out from the projection unit 15R and is wired so as to extend along the inner side of the temple 17R, and is connected to a reproduction device (not illustrated) or the like through the inside of the tip 18R. The signal line 19L is a signal line which is pulled out from the projection unit 15L and is wired so as to extend along the inner side of the temple 17L, and is connected to a reproduction device (not illustrated) or the like through the inside of the tip 18L.

The earphone 20R is connected to a signal line for audio and outputs sound corresponding to an audio signal from the projection unit 15R, the signal line being pulled out from the projection unit 15R. The earphone 20L is connected to a signal line for audio and outputs sound corresponding to an audio signal from the projection unit 15L, the signal line being pulled out from the projection unit 15L.

### [Bottom View of HMD 1]

FIG. 2 illustrates an example view of the HMD 1 as seen in a direction from below (as seen from the back surface of FIG. 1).

In the HMD 1, as illustrated in FIG. 2, the correcting lenses 31R and 31L and the slide portions 32R and 32L are provided on the back surface (the lower side surface in FIG 2) of the front portion 13.

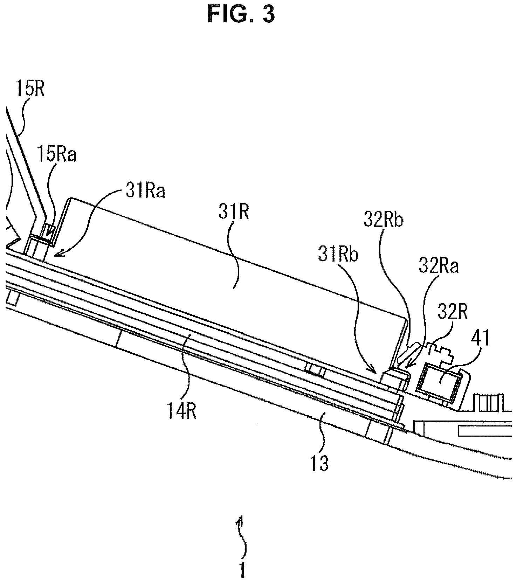

The correcting lens 31R is fixed by a fixing portion 32Ra (FIG. 3) of the slide portion 32R with connected to a connecting portion 15Ra (FIG. 3) provided in the projection unit 15R. Similarly to the correcting lens 31R, the correcting lens 31L is fixed by a fixing portion of the slide portion 32L with connected to a connecting portion provided in the projection unit 15L.

The connecting portion 15Ra may be provided, for example, on the back surface of the front portion 13 instead of the projection unit 15R.

The correcting lenses 31R and 31L are each disposed in an oblique direction as illustrated in FIG. 2. That is, the correcting lens 31R is disposed in an oblique direction from the outer corner to the inner corner of the right eye of a user equipped with the HMD 1, and the correcting lens 31L is disposed in an oblique direction from the outer corner to the inner corner of the left eye of the user equipped with the HMD 1.

### [Example in Which Correcting Lens 31R is Fixed]

Next, FIG. 3 illustrates an example in which the correcting lens 31R is fixed by the fixing portion 32Ra of the slide portion 32R with connected to the connecting portion 15Ra provided in the projection unit 15R.

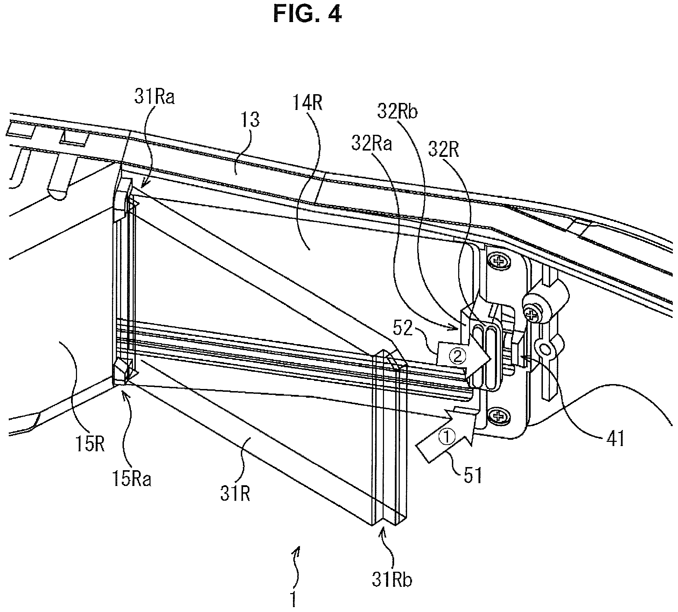

The correcting lens 31 L is also fixed similarly to the case of the correcting lens 31R, and thus only the case where the correcting lens 31R is fixed will be described in FIG. 3. This is also applied to FIGS. 4 to 6 described later.

For example, as illustrated in FIG. 3, the projection unit 15R is provided with the connecting portion 15Ra connected to a projection portion 31Ra of the correcting lens 31R.

For example, the connecting portion 15Ra includes a groove to be fitted to (mated with) the projection portion 31Ra and is connected to the correcting lens 31R by fitting the projection portion 31Ra to the groove.

It should be noted that the connecting portion 15Ra is not limited to a groove to be fitted to the projection portion 31Ra and may have any shape as long as the shape allows the correcting lens 31R to be connected. In the present embodiment, however, description is given under the assumption that the connecting portion 15Ra is a groove to be fitted to the projection portion 31Ra.

As illustrated in FIG. 3, the slide portion 32R is disposed in a predetermined initial position, thereby inserting the correcting lens 31R between the slide portion 32R and the connecting portion 15Ra and fixing the correcting lens 31R to the front portion 13. That is, the slide portion 32R is disposed in the initial position, thereby fixing the correcting lens 31R between the right eye of a user equipped with the HMD 1 and the display panel 14R.

As illustrated in FIG. 3, the slide portion 32R is provided with the fixing portion 32Ra for fixing the correcting lens 31R to the front portion 13.

As one example, the fixing portion 32Ra includes a groove to be fitted to a projection portion 31Rb of the correcting lens 31R, and the projection portion 31Rb is fitted to the groove, thereby fixing the correcting lens 31R to the front portion 13, the correcting lens 31R having the projection portion 31Ra connected to the connecting portion 15Ra. It should be noted that the fixing portion 32Ra is not limited to a groove to be fitted to the projection portion 31Rb and may have any shape as long as the shape allows the correcting lens 31R to be fixed to the front portion 13. In the present embodiment, however, description is given under the assumption that the fixing portion 32Ra is a groove to be fitted to the projection portion 31Rb.

The slide portion 32R is freely slidable from the initial position in the lower right direction in FIG . 3 parallel to the surface of the display panel 14R.

Thus, by sliding the slide portion 32R in the lower right direction in FIG. 3, a user can release the fixation of the correcting lens 31R by the slide portion 32R to remove the correcting lens 31R from the HMD 1. It should be noted that the slide portion 32R is made to be freely slidable in the lower right direction in FIG. 3. The slide portion 32R, however, may be freely slidable in any direction as long as the fixation of the correcting lens 31R by the slide portion 32R can be released in the direction.

Furthermore, the slide portion 32R is provided with an inclined face 32Rb as illustrated in FIG. 3. The inclined face 32Rb is an inclined face that has an acute angle of elevation with respect to the fixing portion 32Ra in the opposite direction (the lower right direction in FIG. 3) to the direction (the upper left direction in FIG. 3) in which the connecting portion 15Ra exists.

The inclined face 32Rb is pushed by the projection portion 31Rb of the correcting lens 31R, thereby causing the slide portion 32R to slide in the lower right direction in FIG. 3.

When the correcting lens 31R is positioned parallel to the display panel 14R as illustrated in FIG. 3, the pressure by the correcting lens 31R to the inclined face 32Rb is released, and the slide portion 32R is slid to the predetermined initial position.

That is, for example, the back surface (surface in the lower right direction in FIG. 3) of the slide portion 32R is provided with a pressing portion 41 that presses the back surface of the slide portion 32R. The pressing portion 41 is configured with, for example, an elastic body (as one example, a spring or rubber) having elasticity. The pressing portion 41 is built in, for example, a member provided on the back surface of the slide portion 32R.

The slide portion 32R is pressed by the pressing portion 41 in the upper left direction in FIG. 3 (the direction in which the connecting portion 15Ra exists), and is slid from a position after sliding to the initial position.

In this manner, the slide portion 32R is disposed in the initial position, thereby fixing the correcting lens 31R.

The pressing portion 41 presses the slide portion 32R in a direction which is parallel to the surface of the display panel 14R and in which the connecting portion 15Ra exists (the upper left direction in FIG. 3).

### [Fixing Method for Correcting Lens]

Next, an example fixing method for fixing the correcting lens 31R to the front portion 13 by a user will be described with reference to FIGS. 4 to 6.

FIG. 4 illustrates an example view of the HMD 1 illustrated in FIG. 3 as seen from the upper side in FIG. 3.

As illustrated in FIG. 4, a user inserts the projection portion 31Ra of the correcting lens 31R into the connecting portion 15Ra of the projection unit 15R in an oblique direction.

The user then moves (rotates) the correcting lens 31R inserted in the connecting portion 15Ra in the direction of arrow 51 (the arrow labeled with "1") illustrated in FIG. 4 around the connecting portion 15Ra as a rotation axis.

Thus, the projection portion 31Rb of the correcting lens 31R comes into contact with the inclined face 32Rb of the slide portion 32R, and the correcting lens 31R moves so as to slide down (descend) along the inclined face 32Rb. Also, the inclined face 32Rb of the slide portion 32R is pressed by the projection portion 31Rb of the correcting lens 31R according to the movement of the correcting lens 31R, and the slide portion 32R is thereby slid in the direction of arrow 52 (the arrow labeled with "2") illustrated in FIG. 4.

Furthermore, when the user moves the correcting lens 31R until the surface of the correcting lens 31R becomes parallel to the surface of the display panel 14R, the pressure by the projection portion 31Rb of the correcting lens 31R to the inclined face 32Rb is released.

When the pressure by the projection portion 31Rb to the inclined face 32Rb is released, the slide portion 32R is slid from the position after sliding to the initial position. At this point, the projection portion 31Ra inserted in the connecting portion 15Ra is fitted to the connecting portion 15Ra in a position where the surface of the correcting lens 31R is parallel to the surface of the display panel 14R.

Also, the other projection portion 31Rb is fixed by the slide portion 32R with the projection portion 31Ra of the correcting lens 31R fitted to the connecting portion 15Ra.

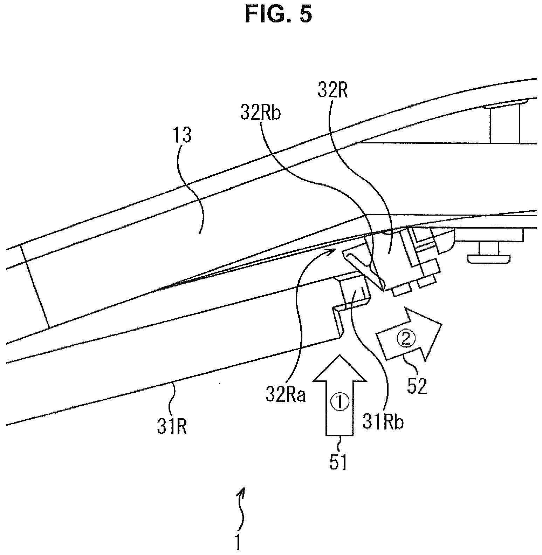

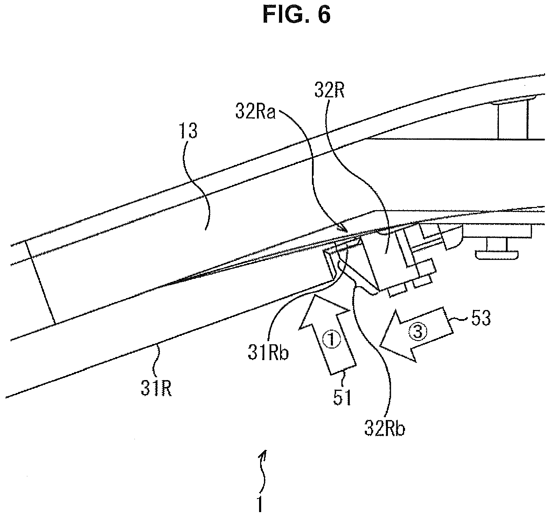

Next, the manner in which the correcting lens 31R is fixed to the slide portion 32R by down movement of the projection portion 31Rb of the correcting lens 31R along the inclined face 32Rb of the slide portion 32R will be described with reference to FIGS. 5 and 6.

FIG. 5 illustrates an example view of the HMD 1 illustrated in FIG. 4 as seen from the upper side in FIG. 4.

For example, a user presses the correcting lens 31R in the direction of the arrow 51 illustrated in FIG. 5, and the inclined face 32Rb of the slide portion 32R is thereby pressed by the projection portion 31Rb of the correcting lens 31R. Thus, the slide portion 32R is slid in the direction of the arrow 52 illustrated in FIG. 5.

Next, FIG. 6 illustrates another example view of the HMD 1 illustrated in FIG. 4 as seen from the upper side in FIG. 4.

When a user keeps pressing the correcting lens 31R in the direction of the arrow 51, the projection portion 31Rb of the correcting lens 31R moves so as to slide along the inclined face 32Rb. When the projection portion 31Rb of the correcting lens 31R passes the inclined face 32Rb, the slide portion 32R is slid in the direction of arrow 53 illustrated in FIG. 6 from the position after sliding and returns to the initial position.

The slide portion 32R is slid by the pressure of the pressing portion 41 from the position after sliding to the initial position.

Consequently, as illustrated in FIG. 6, the projection portion 31Rb of the correcting lens 31R is fitted to the fixing portion 32Ra of the slide portion 32R, thereby fixing the correcting lens 31R to the front portion 13.

As described above, a user only moves and slides the projection portion 31Rb of the correcting lens 31R along the inclined face 32Rb provided on the slide portion 32R with the projection portion 31Ra of the correcting lens 31R inserted in the connecting portion 15Ra, thereby making it possible to easily mount the correcting lens 31R on the front portion 13.

When the correcting lens 31R is removed, by just sliding the slide portion 32R in the opposite direction to the direction in which the connecting portion 15Ra exists, the correcting lens 3 1 R can be easily removed from the front portion 13.

Therefore, a user can attach and detach the correcting lens 31R relatively easily. For this reason, even when unspecified large number of users use the HMD 1 and the correcting lens 31R is frequently replaced, it is possible to prevent a situation in which the correcting lens 31R is dropped and damaged at the time of attaching and detaching the correcting lens 31R.

Also, for example, it is possible to prevent a situation in which attaching and detaching the correcting lens 31R takes time and touching the correcting lens 31R causes smudge such as fingerprints to be left on the correcting lens 31R.

The inventor has also invented a first mounting method as a mounting method for the correcting lens 31R, in which the correcting lens 31R and the front portion 13 are provided with a magnet, and the correcting lens 31R is mounted on the front portion 13 utilizing the attracting force of the magnet.

The inventor has also invented a second mounting method as another mounting method, in which the front portion 13 is provided with a rail in which the projection portions 31Ra and 31Rb of the correcting lens 31R are inserted, and the correcting lens 31R is mounted in a sliding manner.

However, in the above-described first and second mounting methods, the correcting lens 31R is not fixed to the front portion 13 using the slide portion 32R unlike the present embodiment, and thus the correcting lens 31R may come off when used.

For this reason, the inventor adopted a mechanism as a mechanism for attaching and detaching the correcting lens 31R, in which the correcting lens 31R is freely attached and detached using the slide portion 32R.

### <2. Modification>

In the present embodiment, the correcting lenses 31R and 31L are mounted on the HMD 1. However, as one example, a plate-like member for blocking ultraviolet rays or the like may be mounted optionally.

In the present embodiment, the HMD1 for both eyes has been described as one example. However, the present technology is also applicable to an HMD for one eye (for example, an HMD having only a single display panel for one eye), as one example.

### Reference Signs List

- 1: head mounted display
- 11: bent portion
- 12: image capturing unit
- 13: front portion
- 14R, 14L: display panel
- 15R, 15L: projection unit
- 15Ra: connecting portion
- 16R, 16L: hinge
- 17R, 17L: temple
- 18R, 18L: tip
- 19R, 19R: signal line
- 20R, 20L: earphone
- 31R, 31L: correcting lens
- 31Ra, 31Rb: projection portion
- 32R, 32L: slide portion
- 32Ra: fixing portion
- 32Rb: inclined face
- 41: pressing portion

## Claims

1. A display device (1) which is mounted for use on a face of a user, the display device comprising:
a display panel (14L, 14R) which is disposed in front of eyes of the user and on which an image to be visually recognized by the user is projected;
a connecting portion (15Ra) to which a plate-like member (31R) disposed between the eyes of the user and the display panel is connected; a slide portion (32L, 32R) configured to fix the plate-like member between the eyes of the user and the display panel by being disposed in a predetermined initial position and to be slidable in a predetermined direction from the initial position; and
a pressing portion (41) configured to press the slide portion (32L, 32R) in a direction which is parallel to the surface of the display panel, wherein the slide portion is pressed by the pressing portion from a position after sliding to the initial position,
wherein the slide portion (32L, 32R) fixes the plate-like member (31R) connected to the connecting portion (15Ra) by inserting the plate-like member between the slide portion (32L, 32R) and the connecting portion, and wherein the slide portion includes
a fixing portion (32Ra) configured to fix the plate-like member by being disposed in the initial position, and
an inclined face (32Rb) which has an acute angle of elevation with respect to the fixing portion in an opposite direction to a direction in which the connecting portion (15Ra) exists,
wherein the inclined face is configured to be pushed by a projection portion (31Rb) of the plate-like member as the plate-like member inserted in the connecting portion (15Ra) moves in a direction towards the display panel as the surface of the plate-like member is moved to become parallel to the surface of the display panel, thereby causing the slide portion to slide in the predetermined direction from the initial position.

2. The display device according to Claim 1, further comprising
a projection unit (15R) configured to project the image on the display panel (14L, 14R),
wherein the projection unit is provided with the connecting portion (15Ra).

3. The display device according to Claim 2,
wherein the display panel (14L, 14R) allows incident light from an outside to pass through irrespective of whether or not the image is projected.

4. The display device according to Claim 3,
wherein the slide portion (32L, 32R) fixes the plate-like member (31R) by being disposed in the initial position, the plate-like member being connected to the connecting portion (15Ra) and disposed in an oblique direction from an outer corner to an inner corner of the eyes of the user.

## Patentansprüche

1. Anzeigeeinrichtung (1), die zur Verwendung auf ein Gesicht eines Nutzers aufgesetzt wird, wobei die Anzeigeeinrichtung Folgendes umfasst:
ein Anzeigefeld (14L, 14R), das vor Augen des Nutzers angeordnet ist und auf das ein optisch durch den Nutzer wahrzunehmendes Bild projiziert wird,
einen Verbindungsabschnitt (15Ra), mit dem ein zwischen den Augen des Nutzers und dem Anzeigefeld angeordnetes plattenartiges Element (31R) verbunden ist, ein Verschiebeabschnitt (32L, 32R), der dafür ausgelegt ist, das plattenartige Element dadurch, dass er in einer vorab bestimmten Ausgangsposition angeordnet ist,
zwischen den Augen des Nutzers und dem Anzeigefeld zu fixieren, und in einer vorab bestimmten Richtung aus der Ausgangsposition verschiebbar zu sein, und
einen Druckabschnitt (41), der dafür ausgelegt ist, den Verschiebeabschnitt (32L, 32R) in eine Richtung parallel zur Oberfläche des Anzeigefelds zu drücken,
wobei der Verschiebeabschnitt durch den Druckabschnitt aus einer Position nach dem Verschieben in die Ausgangsposition gedrückt wird,
wobei der Verschiebeabschnitt (32L, 32R) das mit dem Verbindungsabschnitt (15Ra) verbundene plattenartige Element (31R) durch Einsetzen des plattenartigen Elements zwischen dem Verschiebeabschnitt (32L, 32R) und dem Verbindungsabschnitt fixiert und wobei der Verschiebeabschnitt Folgendes umfasst:
einen Fixierabschnitt (32Ra), der dafür ausgelegt ist, das plattenartige Element dadurch zu fixieren, dass er in der Ausgangsposition angeordnet ist, und
eine geneigte Fläche (32Rb), die in einer Richtung, die einer Richtung entgegengesetzt ist, in welcher der Verbindungsabschnitt (15Ra) vorhanden ist, in Bezug auf den Fixierabschnitt einen spitzen Erhebungswinkel aufweist,
wobei die Schrägfläche dafür ausgelegt ist, durch einen Vorsprungabschnitt (31Rb) des plattenartigen Elements geschoben zu werden, wenn sich das in den Verbindungsabschnitt (15Ra) eingesetzte plattenartige Element in einer Richtung hin zu dem Anzeigefeld bewegt, wenn die Oberfläche des plattenartigen Elements bewegt wird, um parallel zur Fläche des Anzeigefelds zu werden, wodurch der Verschiebeabschnitt veranlasst wird, sich aus der Ausgangsposition in der vorab bestimmten Richtung zu verschieben.

2. Anzeigeeinrichtung nach Anspruch 1, ferner umfassend:
eine Projektionseinheit (15R), die dafür ausgelegt ist, das Bild auf das Anzeigefeld (14L, 14R) zu projizieren,
wobei die Projektionseinheit mit dem Verbindungsabschnitt (15Ra) versehen ist.

3. Anzeigeeinrichtung nach Anspruch 2,
wobei das Anzeigefeld (14L, 14R) unabhängig davon, ob das Bild projiziert wird oder nicht, von außen einfallendes Licht durchlässt.

4. Anzeigeeinrichtung nach Anspruch 3,
wobei der Verschiebeabschnitt (32L, 32R) das plattenartige Element (31R) dadurch fixiert, dass er in der Ausgangsposition angeordnet ist, wobei das plattenartige Element mit dem Verbindungsabschnitt (15Ra) verbunden ist und von einem äußeren Augenwinkel zu einem inneren Augenwinkel des Nutzers in einer schrägen Richtung angeordnet ist.

## Revendications

1. Dispositif de visualisation (1) qui est destiné à être monté, en cours d'utilisation, sur un visage d'un utilisateur, ce dispositif de visualisation comprenant :
un panneau de visualisation (14L, 14R) qui est disposé devant les yeux de l'utilisateur et sur lequel une image devant être reconnue visuellement par l'utilisateur est projetée ;
une partie de connexion (15Ra) à laquelle un élément en forme de plaque (31R) disposé entre les yeux de l'utilisateur et le panneau de visualisation est connecté ; une partie coulissante (32L, 32R) configurée de façon à fixer l'élément en forme de plaque entre les yeux de l'utilisateur et le panneau de visualisation en étant disposée dans une position initiale prédéterminée et pouvant être coulissée dans une direction prédéterminée depuis la position initiale ; et
une partie de pression (41) configurée de façon à presser la partie coulissante (32L, 32R) dans une direction qui est parallèle à la surface du panneau de visualisation, la partie coulissante étant pressée par la partie de pression depuis une position après avoir coulissé jusqu'à la position initiale,
la partie coulissante (32L, 32R) fixant l'élément en forme de plaque (31R) connecté à la partie de connexion (15Ra) en insérant l'élément en forme de plaque entre la partie coulissante (32L, 32R) et la partie de connexion, la partie coulissante comprenant :
une partie de fixation (32Ra) configurée de façon à fixer l'élément en forme de plaque en étant disposée dans la position initiale, et
une face inclinée (32Rb) qui a un angle aigu d'élévation par rapport à la partie de fixation dans une direction opposée à une direction dans laquelle la partie de connexion (15Ra) existe,
la face inclinée étant configurée de façon à être poussée par une partie de projection (31Rb) de l'élément en forme de plaque tandis que l'élément en forme de plaque dans la partie de connexion (15Ra) bouge dans une direction vers le panneau de visualisation tandis que l'élément en forme de plaque est bougé pour devenir parallèle à la surface du panneau de visualisation, faisant en sorte que la partie coulissante coulisse dans la direction prédéterminée depuis la position initiale.

2. Dispositif de visualisation selon la revendication 1, comprenant en outre :
une unité de projection (15R) configurée de façon à projeter l'image sur le panneau de visualisation (14L, 14R), cette unité de projection étant pourvue de la partie de connexion (15Ra).

3. Dispositif de visualisation selon la revendication 2,
dans lequel le panneau d'affichage (14L, 14R) permet à une lumière incidente venant d'un extérieur de passer à travers, que l'image soit projetée ou pas.

4. Dispositif de visualisation selon la revendication 3,
dans lequel la partie coulissante (32L, 32R) fixe l'élément en forme de plaque (31R) en étant disposée dans la position initiale, l'élément en forme de plaque étant connecté à la partie de connexion (15Ra) et étant disposé dans une direction oblique depuis un coin extérieur à un coin intérieur des yeux de l'utilisateur.
